# EUROPEAN PATENT APPLICATION

(11) **EP 3 915 908 A2**
(43) Date of publication of application: **01.12.2021**
(21) Application number: 21171694.9
(22) Date of filing: 30.04.2021
(51) Int. Cl.: B65G 47/90

(54) **A CLAMPING DEVICE FOR TRANSPORTING AND POSITIONING PACKAGINGS AND A METHOD FOR TRANSPORTING AND POSITIONING PACKAGINGS ON CONVEYORS**

(30) Priority: 04.05.2020 PL 43377220; 12.11.2020 PL 43595320
(71) Applicant: Tkmatik Sp.z.o.o., 80-124 Gdansk (PL)
(72) Inventor: KIE BI SKI, Karol, 80-124 Gda sk (PL)
(74) Representative: Dargiewicz, Joanna

(57) **Abstract**

The invention relates to a clamping device and a method for transporting and positioning packagings on conveyors. A clamping device comprising two linearly guided, reciprocally slidable jaws (1, la), a body (2), a resistance - synchronisation mechanism for synchronising the movement of the jaws with a pinion, characterised in that the resistance - synchronisation mechanism comprises a pinion (3), fitted in an aperture (6) of the body (2) with at least a one-latch circular snap fit joint (5), interlocking on opposite sides with toothed racks (4, 4a) constituting jaw (1, 1a) guides, set in two parallel guide grooves (7, 7a) of the body (2), further comprising a mechanism for quick refitting and shifting of the jaw clamping position comprising a mechanical connection (9, 9a) connecting the jaws (1, 1a) to the body (2) through grooves (10, 10a).

## Description

### Technical Field

The object of the invention is a clamping device for transporting and positioning packagings and a method for transporting and positioning, on conveyors, packagings or other small size products to be used with, among others, devices for filling, labelling or sealing packagings of various shapes and sizes. The invention may be used in transport devices, such as e.g. belt, roller, modular and plates conveyors, which are standard solutions for in-plant transport, but are also adapted to production lines, in particular for small and medium batch production.

There is a number of known solutions for devices, including conveyor-based clamping devices for transporting and positioning, which are used in the processes of, among others, filling, labelling or sealing packagings.

### Backgroud

Chinese patent specification No. CN205147843 discloses a clamping device for fixing the position of a workpiece in the central part of the clamping device. The two jaws of the clamping device are fixed in two bodies interconnected by two guide rails. The central clamping position of the jaws is provided by a mechanism of a gear wheel and two toothed racks interconnected to the bodies. The solution requires to be permanently mounted onto a flat surface and is not adjustable in terms of the position of the object to be fixed.

A known solution for a clamping device used for handling workpieces is provided in Chinese patent specification No. CN105983928. The body of the device is used to support the clamped plate-shaped object. The two clamping jaws are attached to toothed bars guided within the body, with the clamping of the jaws being synchronised by a pinion and the mechanism being locked by a detent.

WIPO patent specification No. WO2006041298A2 discloses a method for positioning on conveyors and a device in the form of a positioning means adapted to be mounted on standard conveyors, which allows products to be fixed in series in transport without adjusting the distance between the products. Its design allows the positioners to be readily reset so as to adapt to a product size, or to change the height of the product arrangement in relation to the conveyor. Given the risk of products of various shapes getting jammed, it is only suitable for products of rounded shapes.

Japanese patent specification No. JP2742348B2 discloses a method for positioning on conveyors and a positioning device permanently mounted on conveyors, which allows for precision centring of the product in the longitudinal direction by means of two jaws which close synchronously. This solution is limited to positioning a workpiece in the central part of the conveyor.

Polish patent specification No. PL402450 discloses a method for transporting and positioning packagings and a device intended for transporting packagings of various sizes, provided with two cooperating side conveyors with jaw clutches, characterised in that the side conveyors are adapted to a specific size of the packaging being transported by scaling the area formed between mutually positioned belt conveyors and jaw clutches, with the scaling being performed relative to the axis of the packaging holding area, wherein the conveyor drives rotate in the same direction during the adjustment of the side conveyors, and the conveyor drives rotate concurrently in opposite directions during the transport of packagings. The solution provides only one product spacing for a particular size, and it is possible to change the size of the packaging once the previous batch has been completed. This is a system already dedicated to the process, an integrated conveyor, so that adapting a standard conveyor not only may not be always possible, but would also be expensive.

Chinese patent specification No. CN108544404A discloses a device for positioning workpieces being machined or transported in the centre of a device. Said positioning is performed in two, preferably four, jaws, which use a centring mechanism to couple the movement of the jaws. The whole mechanism is fixed in the frame of the device, which is the base for fixing the device in the working area of the machine. Said solution, however, does not allow the quick exchange of clamping jaws, which would otherwise be useful when adjusting the device to various shapes, nor does it allow the workpiece to be fixed in a different position relative to the clamping device frame than the central one.

A solution developed by Beckhoff Automation is known and disclosed on the following website: https://img.packworld.com/files/base/pmmi/all/image/2019/08/pw_9689396_puck_holders.p ng?ar=16%3A9&auto=format&crop=focalpoint&fit=crop&fp-x=0.5&fp-y=0.5&w=1140

The solution illustrates a method for transporting and positioning workpieces using integral holders dedicated to one packaging size. The object is positioned on the holder in only one predetermined manner, and only one product shape fits into one holder, so that it is necessary to stock a large number of holders for handling different product series. Moreover, renovation of worn holders is more expensive than producing new ones.

Prior art transport and positioning devices to be used with filling devices require a change of tooling when the packaging size is changed, or limit the positioning of the workpiece to a single position, or limit the positioning to a single spacing, or permanently alter the design of the pre-loader, or constitute standalone inter-process transport devices dedicated to the process.

Prior art solutions are configured for high volume production with low production flexibility. Thus, there is a substantial demand for universal solutions dedicated to small batch production with high flexibility. When automating small batch production, it is essential to minimise tooling costs and to develop flexible production systems.

There are universal transport devices, such as e.g. belt, roller, modular, plate conveyors, which constitute standard solutions for in-plant transport, but are also adapted to production lines, in particular for small and medium batch production. Such devices are widely available, low-cost, simple to integrate into the production line and fast. The technical problem of using universal conveyors is the positioning of the product on the conveyor; it is also difficult to use their capabilities, especially their speed, in a production line for small, unstable workpieces and precision processes. There are two methods for positioning workpieces during the conveyor transport process: one involves positioners mounted at the conveyor, and the other uses holders as product support means. Positioners may be used with products whose shape will not make them prone to mutual jamming, or create a risk of the product tipping over, or it will remain irrelevant to the process. In other cases, products require the use of support means, i.e. holders, which would fix the product sufficiently stably and precisely for the process. Support means used in this type of solutions are usually dedicated to one type of product, positioning it in the process in one possible manner, and are often designed to transport more products simultaneously, which limits the production volume to a multiple of the designed holder capacity. This requires additional warehouses for holders to be provided in the vicinity of production lines, with the size of the former becoming substantial, often just as large as that of the warehouse with the products themselves, given the variety of holders. This is a major drawback due to the often small dimensions of production facilities adapted to small batch production and due to the financial burden associated with their production. Another problem is the renovation of worn holders, the cost of which exceeds many times that of producing a new holder.

### Summary

It is an object of the invention to develop a universal clamping device and a method for transporting and positioning packagings of various shapes and sizes on universal conveyors to allow high production flexibility. The solution of the invention will allow quick, manual assembly of the workpiece and adjustment of its position; it has a system of quick refitting of jaws dedicated to various packagings, and the clamping device itself does not interfere with the construction of conveyors. Its functionality, in turn, allows for a quick and low-cost renovation of the clamping device.

The clamping device for transporting and positioning packagings of the invention comprises two linearly guided, reciprocally slidable jaws, a body, and a resistance - synchronisation mechanism with pinion for drag impacting and synchronising the movement of the jaws. The clamping device of the invention is characterised in that the resistance - synchronisation mechanism comprises a pinion fitted in an aperture of the body with at least a one-latch circular snap fit joint. The pinion interlocks on opposite sides with the toothed racks which constitute the jaw guides set in two parallel guide grooves of the body. Moreover, the clamping device is provided with a mechanism for quick refitting and shifting the jaw clamping position, comprises a mechanical connection connecting the jaw and the body through grooves. The use of the resistance - synchronisation mechanism in combination with the mechanism for quick refitting and shifting the jaw clamping position significantly accelerates the assembly of packagings in the clamping device in a position dedicated to the process. The use of toothed racks as jaw guides provides a more compact structure.

The grooves are preferably through and have at least one extension wider than the stop diameter of the mechanical connection. This groove geometry allows the jaws to be immediately released from the clamping device by shifting the mechanical connection into the widened area of the grooves, thus enabling the clamping device to be easily refitted.

Preferably, the grooves are through and open towards the edge of the body. This groove geometry allows the jaws to be immediately released from the clamping device by sliding the mechanical connection out of the body.

Preferably, the aperture of the body has longitudinal notches.

Preferably, the pinion is tightly fitted in the aperture of the body.

Preferably, there are spring means provided between the mechanical connections and the jaws. Pressing the mechanical connection from the top results in the tensioning of the spring means, which reduces the sliding resistance of the jaws when mounting or dismounting the workpiece. The spring means allows the jaw to be released from the synchronisation mechanism and shifted elsewhere to adjust the jaw clamping position. The connection of the pinion to the body and the mechanical connection of the jaws to the body by means of the spring means ensure that the resistance of the mechanism is sufficient to prevent the jaws from opening spontaneously and to allow manual adjustment of the jaw position.

Preferably, the mechanical connections comprise a nut arranged in the recess of the jaw and a bolt with a hexagonal head fixed in the body.

Preferably, the grooves are two-stage, where the wider part of the groove lies opposite to the jaws and is wider than the height and narrower than the diagonal of the hexagon of the bolt head located therein. This width of the groove prevents the bolt from rotating, which allows the resistance of the mechanism to be adjusted by turning the nut when mounting the packaging, while further unscrewing of the nut located in the recess of the jaw results in the jaw being released from the synchronisation mechanism so that it can be shifted elsewhere to adjust the clamping position of the jaws. Once the bolt head has been released and slid out of the groove, in order to unscrew the bolt from the nut, it is necessary to counter the bolt head to prevent inadvertent disconnection.

Preferably, the jaws are integral with the toothed racks.

Preferably, the pinion has a through aperture in the axis of rotation of the pinion. Said aperture allows the information to be printed on the bottom of the packaging or to be read during the transport process.

In a preferred variant, the pinion, jaws and body are made of plastic with 3D printing technology. Preferred variants of using plastic and making details in the 3D printing technology as above promote the lightness of the structure, fast and inexpensive reconstruction of individual elements.

A method for transporting and positioning packagings on conveyors relative to successive packagings and the conveyor, in the process of transporting on universal conveyors, wherein the method comprises the packaging being moved within a clamping device, the body of which is a support plate for one packaging, and wherein the positioning of the packaging in the process is performed manually, by fixing the position relative to the clamping device within the sliding path of the two fixing jaws, positioning the clamping device on the pre-loader parallel or perpendicular to the direction of movement, preferably positioning the body of the clamping device between the guide rails of the pre-loader, wherein the clamping devices are arranged in series or in rectangular array relative to each other. This method allows for simultaneous running of different series of products thanks to the individual setting adjustment and the versatility of the packaging fixing.

The packaging is preferably identified in the transport by reading the RFID sticker mounted in the clamping device.

In a preferred aspect, the packaging is identified in the transport by reading the barcode located on its bottom through an aperture in the clamping device.

### Drawings

In the following description, various embodiments of the present disclosure are described with reference to the following drawings, in which:
Fig. 1 - shows a 1st variant of the clamping device in perspective view,
Fig. 2 - shows a front view from below of the clamping device in the 1st variant,
Fig. 3 - shows a cross-section A-A according to Fig. 2 of the clamping device in its 1st variant,
Fig. 4 - shows a 2nd variant of the clamping device in perspective view,
Fig. 5 - shows a front view from below of the clamping device in variant 2,
Fig. 6 - shows a cross-section B-B according to Fig. 2 of the clamping device in its 2nd variant,
   The method according to the invention is shown in the drawings:
Fig. 7 - shows a front view from the top of the conveyor working area with clamping devices arranged in three rows,
Fig. 8 - shows a front view from the top of the conveyor working area with clamping devices arranged in a single row.

### Detailed description

Embodiments of the invention will now be described more fully hereinafter with reference to the accompanying drawings, in which some, but not all, embodiments of the invention are shown. The invention may be embodied in many different forms and should not be construed as limited to the embodiments set forth herein.

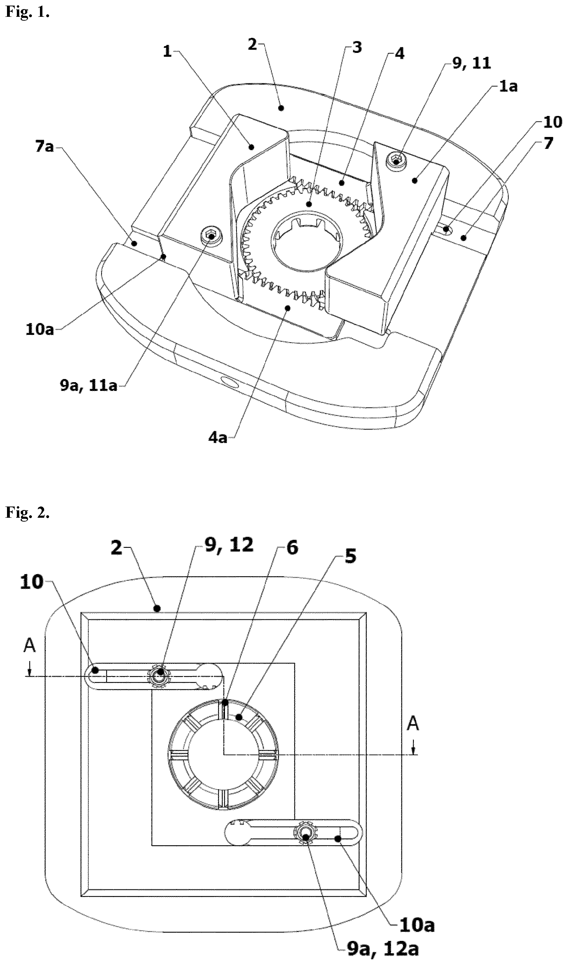

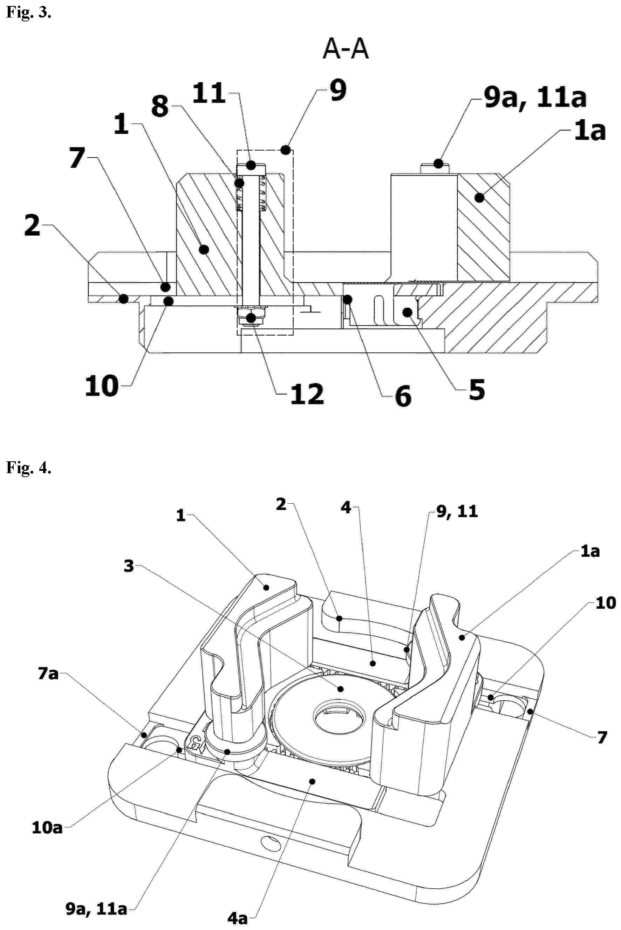

As disclosed in the drawing of Fig. 1, the clamping device includes two linearly guided, reciprocally slidable jaws 1,1a, which are integral with toothed racks 4, 4a, a body 2, a resistance - synchronisation mechanism for drag impacting and synchronising the movement of the jaws and a mechanism for quick refitting and shifting of the jaw clamping position. The resistance - synchronisation mechanism comprises a pinion 3 tightly fitted in a longitudinally notched aperture 6 of the body 2 with an eight-latch circular snap fit joint 5 - this connection is illustrated in the drawing of Fig. 3. As shown in the drawing of Fig.1, the pinion 3 interlocks on opposite sides with the toothed racks 4, 4a which constitute the jaw 1,1a guides set in two parallel guide grooves 7, 7a of the body 2. Furthermore, as illustrated in the drawing of Fig.3, the mechanism for quick refitting and shifting of the jaw clamping position includes a spring means 8, 8a and a mechanical connection 9, 9a connecting the jaw 1, 1a to the body 2 through through grooves 10, 10a of variable width, shown in Fig. 2. The mechanical connection 9, 9a, illustrated in Fig. 3, consists of a bolt 11, 11a with cylindrical head and a hexagonal nut 12, 12a with a flange. The through grooves 10, 10a in the area of movement of the jaws 1, 1a are not wider than the stop diameter of the mechanical connection 9, 9a, and in the area of disassembly and adjustment of the spacing of the jaws 1, 1a - wider than the stop diameter of the mechanical connection 9, 9a. The pinion 3, the jaws 1, 1a, and the body 2 are made of plastic with 3D printing technology.

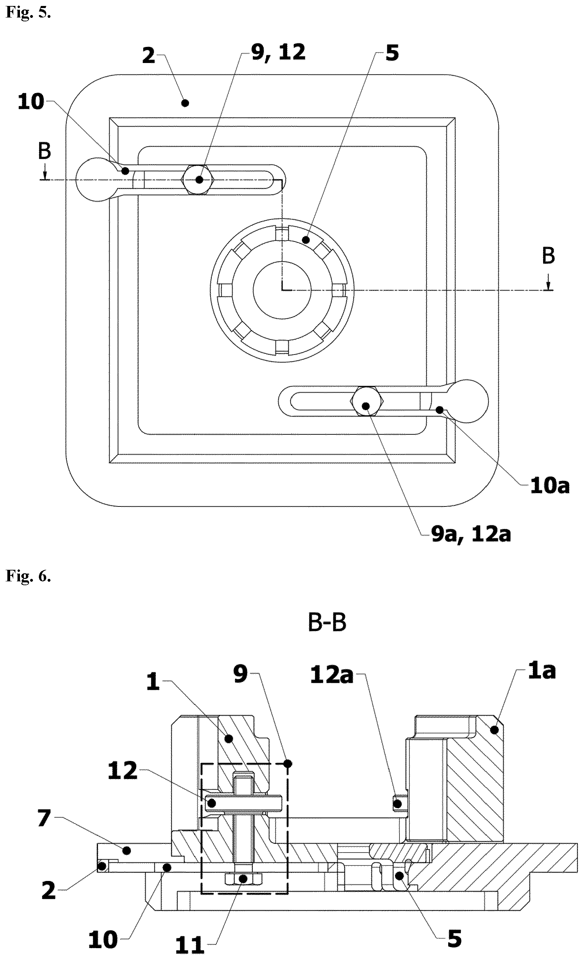

The drawing of Fig.4 discloses a clamping device for transporting and positioning packagings, comprising two linearly guided, reciprocally slidable jaws 1, 1a integral with toothed racks 4, 4a, a body 2, a resistance - synchronisation mechanism with pinion for drag impacting and synchronising the movement of the jaws. The resistance - synchronisation mechanism comprises the pinion 3, fitted into an aperture 6 of the body 2 by an eight-latch circular snap fit joint 5. The pinion 3 interlocks on opposite sides with the toothed racks 4, 4a. The toothed racks 4, 4a constitute jaw 1, 1a guides set in two parallel grooves 7, 7a provided in the body (2) as guide rails for the jaws 1, 1a. The clamping device further comprises a mechanism for quick refitting and shifting of the jaw clamping position, comprising a mechanical connection 9, 9a connecting the jaws 1, 1a to the body 2 through grooves 10, 10a shown in the cross-section in the drawing of Fig.6. The grooves 10, 10a, illustrated in Fig. 5, are through and have an extension wider than the stop diameter of the mechanical connection 9, 9a. The mechanical connections 9, 9a comprise a nut 12, 12a arranged in the recess of the jaw and a bolt 11, 11a with a hexagonal head fixed in the body. The grooves 10, 10a illustrated in the drawing of Fig. 5 are two-stage, where the wider part of the groove lies opposite to the jaws and is wider than the height and narrower than the diagonal of the hexagon of the bolt 11, 11a head located therein. The pinion 3 has a through aperture in the axis of rotation of the pinion 3.

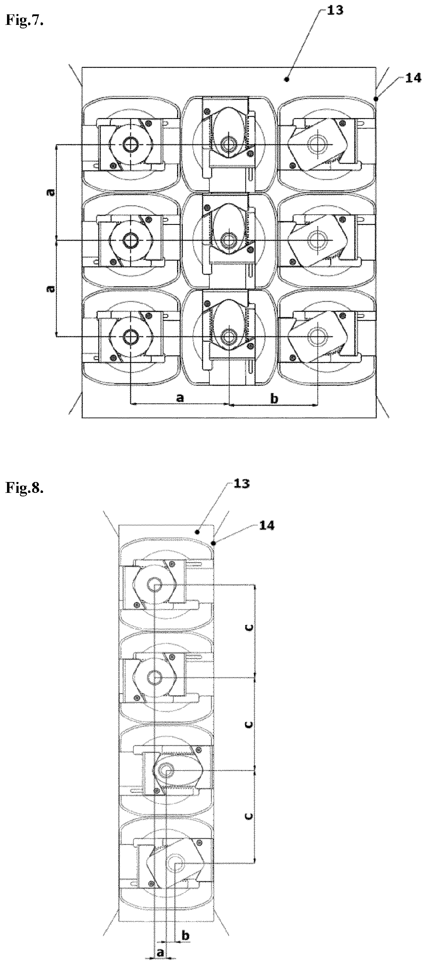

The method for transporting and positioning packagings on conveyors consists in the packaging being mounted in a clamping device, and in the next step the clamping device being positioned on the conveyor. In an embodiment of the method illustrated in Fig. 7, the clamping devices with packagings are arranged in three rows, where each row is assigned to a different type of product. In the first (left) row, the packaging is arranged centrally on the clamping device and the clamping device is positioned longitudinally to the direction of transport. In the second (middle) row, the clamping device jaws are shifted so that the aperture of the packaging is located centrally in the clamping device, and the clamping device is positioned on the conveyor transversely to the direction of transport. Thus, the apertures of the packagings in the first row are at the same height as the apertures of the packagings in the second row, separated by a distance "a". In the third (right) row, the packaging is not located centrally in the clamping device, and the clamping device is positioned transversely to the direction of transport. As a result of said positioning, the apertures of the packagings in the third row are at the same height as the apertures of the packagings in the other rows, separated by a distance "b" from the apertures of the second row.

In another embodiment of transporting and positioning shown in the accompanying drawing of Fig. 8., various packagings are transported in a single line. The distance between the products is constant, and the filling apertures are positioned in different axes for different products.

## Claims

1. A clamping device for transporting and positioning packagings, comprising two linearly guided, reciprocally slidable jaws (1, la), a body (2), a resistance - synchronisation mechanism for synchronising the movement of the jaws with a pinion, **characterised in that** the resistance - synchronisation mechanism comprises a pinion (3), fitted in an aperture (6) of the body (2) with at least a one-latch circular snap fit joint (5), interlocking on opposite sides with toothed racks (4, 4a) constituting jaw (1, 1a) guides, set in two parallel guide grooves (7, 7a) of the body (2), further comprising a mechanism for quick refitting and shifting of the jaw clamping position comprising a mechanical connection (9, 9a) connecting the jaws (1, 1a) to the body (2) through grooves (10, 10a).

2. The clamping device according to claim 1, **characterised in that** the grooves (10, 10a) are through and have at least one extension wider than the stop diameter of the mechanical connection (9, 9a).

3. The clamping device according to claim 1, **characterised in that** the grooves (10, 10a) are through and open towards the edge of the body (2).

4. The clamping device according to claim 1 or 2, or 3, **characterised in that** the aperture (6) of the body (2) is longitudinally notched.

5. The clamping device according to claim 4, **characterised in that** the pinion is tightly fitted in the aperture (6) of the body (2).

6. The clamping device according to claim 5, **characterised in that** spring means (8, 8a) are provided between the mechanical connections (9, 9a) and the jaws (1, 1a).

7. The clamping device according to claim 2 or 3, **characterised in that** the mechanical connections (9, 9a) comprise a nut (12) located in the recess of the jaw and a bolt (11) with a hexagonal head fixed in the body.

8. The clamping device according to claim 7, **characterised in that** the grooves (10, 10a) are two-stage, where the wider part of the groove lies opposite to the jaws and is wider than the height and narrower than the diagonal of the hexagon of the bolt (11) head located therein.

9. The clamping device according to claim 1 or 2, or 3, or 4, or 5, or 6, or 7, or 8, **characterised in that** the jaws (1, 1a) are integral with the toothed racks (4, 4a).

10. The clamping device according to claim 1 or 2, or 3, or 4, or 5, or 6, or 7, or 8, or 9, **characterised in that** the pinion (3) has a through aperture in the axis of rotation of the pinion (3).

11. The clamping device according to claim 1 or 2, or 3, or 4, or 5, or 6, or 7, or 8, or 9, or 10, **characterised in that** the pinion (3), the jaws (1, la), and the body (2) are made of plastic with 3D printing technology.

12. A method for transporting and positioning packagings on conveyors relative to successive packagings and the conveyor, in a process of transporting on universal conveyors, in which method the packaging is moved within a clamping device, the body (3) of which is a support plate for one packaging, **characterised in that** the positioning of the packaging in the process is performed manually, by fixing the position relative to the clamping device within the sliding path of the two fixing jaws (1, la), positioning the clamping device on the pre-loader (13) parallel or perpendicular to the direction of movement of the pre-loader, wherein the clamping devices are arranged in series or in an array relative to each other.

13. The method according to claim 12, **characterised in that** the packaging is identified in transport by reading the RFID sticker mounted in the clamping device.

14. The method according to claim 12, **characterised in that** the packaging is identified in transport by reading the barcode located on its bottom through an aperture in the clamping device.
